# EUROPÄISCHE PATENTSCHRIFT

(11) **EP 2 113 416 B1**
(45) Veröffentlichungstag und Bekanntmachung des Hinweises auf die Patenterteilung: **03.10.2012**
(21) Anmeldenummer: 09002718.6
(22) Anmeldetag: 26.02.2009
(51) Int. Cl.: B60P 7/08

(54) **Anordnung zur Ladungssicherung**
Assembly for securing loads
Agencement de sécurisation de chargement

(30) Priorität: 30.04.2008 DE 102008021806
(43) Veröffentlichungstag der Anmeldung: 04.11.2009
(73) Patentinhaber: Fahrzeugwerk Bernard Krone GmbH, 48480 Spelle (DE)
(72) Erfinder: Krone, Bernard, 48480 Spelle (DE); Sasse, Uwe, 49716 Meppen (DE); Möhlenkamp, Wilhelm, 49757 Werlte (DE)
(74) Vertreter: Pott, Ulrich

(56) Entgegenhaltungen:
- US-A- 3 377 039
- US-A- 3 722 910
- US-A- 4 936 724
- US-A- 4 969 784
- US-A- 5 620 124
- US-A- 5 774 948
- US-A1- 2006 133 907
- US-A1- 2006 177 283

## Beschreibung

Die Erfindung bezieht sich auf eine Anordnung zur Sicherung von Ladung auf Ladeflächen von Ladeaufliegern, Containern oder dergleichen Fahrzeugaufbauten von Nutzfahrzeugen mit an den Längsaußenseiten der Ladefläche angeordneten, mit Lochausnehmungen versehenen Haltemitteln.

Aus der EP 1 291 239 B1 ist eine Anordnung zur Sicherung von Ladung der vorgenannten Art bekannt, bei der das Ladegut mit Spannmitteln, die sich in Fahrzeuglängsrichtung über das Ladegut erstrecken, gegen ein Verrutschen sowohl in Fahrzeuglängsachse als auch in Fahrzeugquerrichtung sichern lassen. Dazu sind quer zur Fahrtrichtung ausgerichtete Balken vorgesehen, die sich in Bezug zur Fahrzeuglängsrichtung in nahezu jeder Position an den Längsaußenseiten einer Ladefläche befindlichen Haltemitteln anbringen lassen und die über ihre Länge verteilt mit Zurrlöchern zur Aufnahme von Spannmitteln versehen sind, so dass die zu sichernde Ladung mit Reibschluss von z.B. Spanngurten überspannt werden kann.

Aus der US 3,377,039 A ist eine Anordnung zur Ladungssicherung bekannt, bei der in Seitenwänden von Fahrzeugaufbauten Lochausnehmungen vorgesehen sind, die von einer Verzurrhakenanordnung zu hinterlegen sind. Dabei werden Verzurrhaken eingesetzt, die versenkt hinter der Außenerstreckung der Ladebordwand anzuordnen und um eine horizontale Achse zu verschwenken sind. Sollen diese genutzt werden von z.B. Spannmitteln, stehen diese aus der Lochausnehmung vor, so dass die Spannmittel an den Außenseiten der Ladebordwand anliegen. Diese Verzurrhaken können darüber hinaus die maximal zulässigen Außenabmessungen eines Nutzfahrzeugaufbaus überschreiten. Die Spannkräfte eines Spannmittels werden zudem nicht direkt auf die Verzurrhaken übertragen, sondern wirken zu einem erheblichen Teil auf die Außenflächen der Ladebordwände ein. Zudem sind diese Verzurrhaken nicht in und gegen die Fahrtrichtung verschwenkbar, so dass z.B. eine Diagonalverspannung so ohne weiteres nicht möglich ist oder aber die Gesamtanordnung außerordentlich von den einwirkenden Spannkräften her belastet. Darüber hinaus ist es erschwert, unterschiedliche Verzurrhakengrößen und Verzurrhakenformen zu verwenden.

Bei vielen Fahrzeugen werden jedoch Ladungssicherungsanordnung in Gestalt von Rahmenaußenleisten mit Lochausnehmungen genutzt, die unterschiedliche Formen und Abmessungen haben, um mit den unterschiedlichen Verzurrhakengrößen und -formen der Spannmittel erforderlich machen. Viele Nutzfahrzeuge werden jedoch in Mietparks genutzt, so das die Mieter Spannmittel selbst beizubringen haben.

Es ist daher Aufgabe der vorliegenden Erfindung, eine Anordnung zur Sicherung von Ladung auf Ladeflächen zur Verfügung zu stellen, die es ermöglicht, lösbar und a-daptierbar Spannmittel anzubringen.

Zur Lösung dieser Aufgabe zeichnet sich die Anordnung zur Sicherung von Ladung auf Ladeflächen der eingangs genannten Art durch die im Patentanspruch 1 angegebene Gestaltung aus. Hinsichtlich wesentlicher weiterer Ausgestaltungen der Erfindung wird auf die Ansprüche 2 bis 8 verwiesen.

Damit ist eine Anordnung zur Ladungssicherung auf Ladeflächen von Nutzfahrzeugen geschaffen, bei der die Basiselemente mit ihren gegenüber diesen einwärts zur Ladefläche hin verschwenkbaren Verzurrhaken lösbar und damit demontierbar an entsprechenden Lochausnehmungen der Haltemittel festlegbar sind, die mithin nicht fahrzeugherstellersystembezogen ausgebildet sind, sondern über einfache Verschraubungen mit entsprechenden Lochausnehmungen der Haltemittel zu versehen sind. Gleichwohl lassen sich diese in und entgegen die Fahrtrichtung verschwenken und auch in einer Ruheposition im Wesentlichen versenkt anordnen. Die Verzurrhaken sind relativ gegenüber dem Basiselement zu verschwenken, und zwar einwärts zur Ladefläche hin, und dies auch wiederum in einer in und entgegen der Fahrtrichtung verschwenkten Stellung des Basiselementes. Um eine Schwenkbewegungsbegrenzung quer zur Fahrzeuglängsrichtung gewährleistet zu haben zwecks Herbeiführung eines bündigen Abschlusses mit einer senkrechten Ladebordwand sind bevorzugtermaßen am Basiselement Anschläge vorgesehen.

Die Aufnahme des Verzurrhakens kann so gestaltet sein, dass verschiedene handelsübliche Spanngurtsysteme dort festgelegt werden können, die dort lediglich einzuhaken sind.

Zur weiteren Erläuterung der Erfindung wird auf die weitere Beschreibung und die Zeichnung verwiesen. In der Zeichnung zeigen:
- Fig. 1: ausschnittsweise in einer schematischen perspektivischen Einzelansicht die Ladefläche eines Nutzfahrzeuges mit einem an deren Längsaußenseite angeordneten Haltemittel mit einem daran befestigten Ausführungsbeispiel eines Basiselementes mit Verzurrhaken,
- Fig. 2: in einer perspektivischen Einzelansicht das Basiselement mit dem Verzurrhaken gemäß dem Ausführungsbeispiel nach Fig. 1.

In der Zeichnung sind grundsätzlich übereinstimmende Teile mit übereinstimmenden Bezugsziffern versehen.

Allgemein mit 1 ist die Ladefläche eines Nutzfahrzeuges bezeichnet. Diese kann die Ladefläche eines Containers oder eines sonstigen Fahrzeugaufbaus sein. An deren Längsaußenseite 2 ist ein allgemein mit 3 beziffertes Haltemittel vorgesehen, das in dem veranschaulichten Ausführungsbeispiel als Verzurrleiste ausgebildet ist mit Verzurrlöchern 4 und zwischen den Verzurrlöchern 4 angeordneten kleineren Lochausnehmungen 5. Das Haltemittel 3 in Gestalt der Verzurrleiste ist derart ausgebildet, dass es eine zum Ladeflächeninneren hin ausgerichtete Einbuchtung 6 aufweist und einen Außenbereich 7 hat, der abgewinkelt zur Außenfläche der Ladefläche weist, so dass sich ein Raum ergibt, der z.B. gegenüber einer Lastenbordwand eines Aufbaus zur Innenfläche der Ladefläche 3 hin einen Aufnahmeraum ausbildet. In die Verzurröffnungen 4 können wie herkömmlich die Ladefläche quer überspannende Ladebalken und dergleichen eingesetzt und arretiert werden.

In die kleineren Lochausnehmungen 5 ist ein Basiselement 9 mit dem an diesem befestigten Verzurrhaken 10 einzusetzen. Dies erfolgt über eine Schraube 11, eine Unterlegscheibe 12 sowie eine Mutter 13, das für die Montage durch die Verzurröffnungen 4 eingebracht werden kann und hinter den kleineren Lochausnehmungen 5 plaziert wird, wonach das Basiselement 9 sowie die Schrauben 11 und 12 eingebracht und mit der Mutter 13 verschraubt wird.

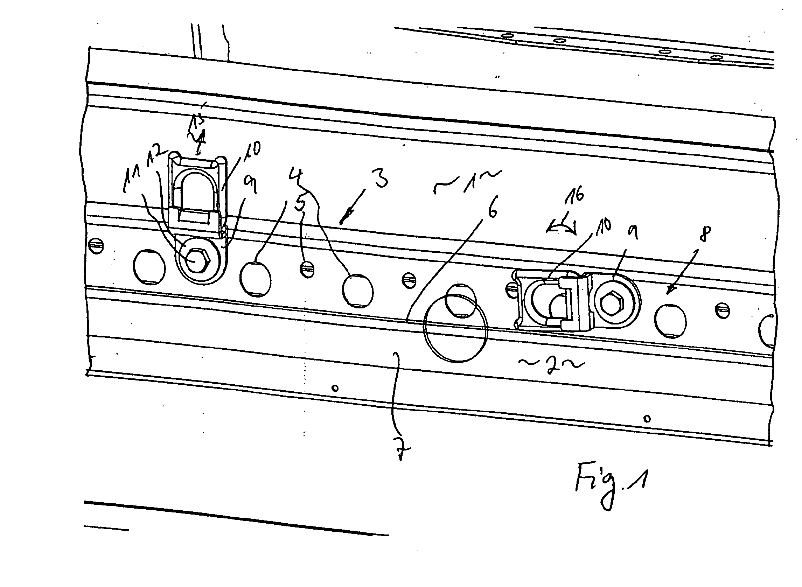

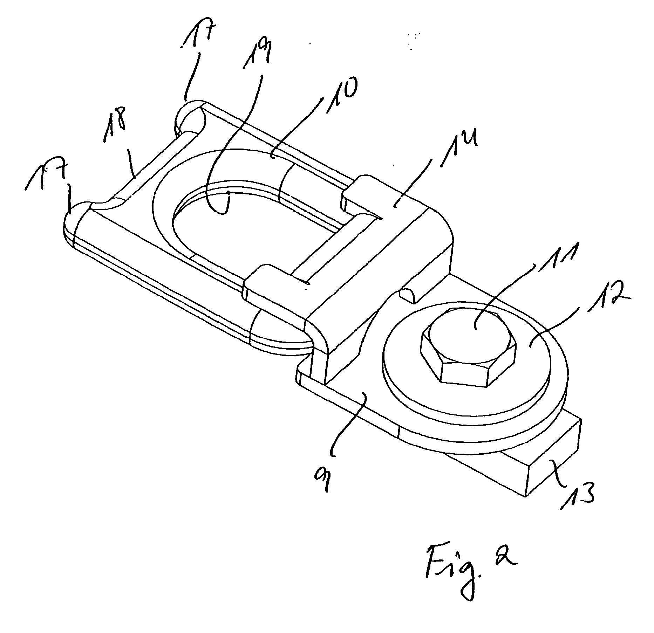

Wie näher aus Fig. 2 hervorgeht, weist das Basiselement 9 einen angeschweißten, abgekröpften Anschlag 14 auf, innerhalb dessen der Verzurrhaken 10 in Richtung 15 zum Inneren der Ladefläche 1 bewegbar ist, jedoch eine Bewegung in Gegenrichtung nach außerhalb des Haltemittels nicht zulässt. Damit kann der Verzurrhaken 10 in Richtung des Pfeils 15 um eine horizontale Achse zur Ladungsfläche hin verschwenkt werden und darüber hinaus auch in Richtung der Pfeile 16 (Fig. 1) in und entgegen die Fahrtrichtung des Nutzfahrzeuges, wie in Fig. 1 in der rechten Darstellung des Basiselementes 9 mitsamt dem Verzurrhaken 10 veranschaulicht. In der dort gezeigten rechten Darstellung des Basiselementes 9 mit den Verzurrhaken 10 befinden sich diese in einer gegenüber der Ladefläche versenkten Park- bzw. Ruheposition und damit in der Einbuchtung 6 des Haltemittels 3 bzw. der Verzurrleiste 3.

Um aus dieser Position beispielsweise auch bei Containeraufbauten mit Seitenbordwänden den Verzurrhaken 10 mitsamt dem Basiselement 9 aus dieser Parkposition herauszuschwenken, sind höckerförmige Anformungen 17 an dem Verzurrhaken 10 vorgesehen. Zwischen diesen höckerförmigen Anformungen 17 erstreckt sich ein Mittelsteg 18, der oberseitig den O-förmigen Hakenaufnahmebereich 19 des Verzurrhakens 10 begrenzt. In diesen O-förmigen Hakenaufnahmebereich 19 lassen sich gängige verzurrleistenunabhängige Verzurrgurte einhaken.

Wie näher auch aus der Fig. 1 hervorgeht, ist dort der dargestellte linke Verzurrhaken 10 derart an dem als Verzurrleiste ausgebildeten Haltemittel 3 gehaltert, dass sich dieser auch in seiner aufrechten Stellung einwärts verschwenken lässt und dabei die Oberseite der Verzurrleiste 3 überlappt, wenn er sich im wesentlichen waagerecht und damit horizontal erstreckt. Die entsprechende Verschwenkung lässt sich auch einstellen, wenn der Verzurrhaken 10 eine Winkelstellung zur Vertikalen einnimmt.

Insgesamt ergibt sich damit, dass sich - ohne den Vorteil einer von unten geschlossenen Verzurrleiste aufgeben zu müssen - das Basiselement 9 mit dem Verzurrhaken 10 an dem ohnehin an einer solchen Verzurrleiste 3 vorgesehenen Löchern 5 demontierbar anbringen lässt, und zwar auch bei geschlossenen Bordwänden von Aufbauten, ohne dass die Funktion der Verzurrleiste für sonstige Ladungssicherungsanordnungen beeinträchtigt wird.

## Patentansprüche

1. Anordnung zur Sicherung von Ladung auf Ladeflächen (1) von Ladeaufliegern, Containern oder dergleichen Fahrzeugaufbauten von Nutzfahrzeugen mit an den Längsaußenseiten (2) der Ladefläche (1) angeordneten, mit Lochausnehmungen versehenen Haltemitteln (3), wobei an Lochausnehmungen (5) der Haltemittel (3) Basiselemente (9) lösbar angeordnet sind, an denen quer zur Fahrtrichtung des Nutzfahrzeuges und damit um eine im Wesentlichen parallel zur Fahrzeuglängsachse gelegene Schwenkachse verschwenkbare Verzurrhaken (10) festgelegt sind und wobei an den Lochausnehmungen (5) der Haltemittel (3) in und gegen die Fahrtrichtung des Nutzfahrzeuges um eine im Wesentlichen horizontale Achse verschwenkbare Basiselemente (9) lösbar angeordnet sind, **dadurch gekennzeichnet, dass** in aufrechter Stellung eines Basiselementes (9) an dem Haltemittel (3) das Basiselement (9) eine Basiselementhocherstreckung derart hat, dass der mit dem Basiselement (9) verbindbare Verzurrhaken (10) einwärts quer zur Fahrtrichtung zur Ladefläche (1) hin verschwenkbar ist, so dass dieser eine im Wesentlichen horizontale Verzurrstellung einnehmen kann und die oberseitige Stirnkante des Haltemittels (3) überlappt.

2. Anordnung zur Sicherung von Ladung nach Anspruch 1, **dadurch gekennzeichnet, dass** das Basiselement (9) einen Anschlag (14) aufweist, der die Verschwenkbarkeit des Verzurrhakens (10) quer zur Fahrtrichtung des Nutzfahrzeuges über die Außenkante der Ladefläche (1) hinaus begrenzt.

3. Anordnung zur Ladungssicherung nach Anspruch 1 oder 2, **dadurch gekennzeichnet, dass** die Haltemittel (3) im Bereich der Anordnung der Basiselemente (9) eine zur Nutzfahrzeuglängsachse hin ausgerichtete Einbuchtung (8) aufweisen, in der das Basiselement (9) in und gegen die Fahrtrichtung verschwenkbar und in einer Ruhestellung im wesentlichen versenkt gegenüber eines sich daran anschließenden unteren Außenbereiches (7) des Haltemittels (3) anzuordnen ist.

4. Anordnung zur Sicherung von Ladung nach einem der Ansprüche 1 bis 3, **dadurch gekennzeichnet, dass** das Basiselement (9) einen mit einem Schraubloch versehenen Zurrring und eine mit diesem verbundene Anschlagnase (14) hat, wobei die Anschlagnase (14) einen Bereich des Verzurrhakens zumindest bereichsweise umgreift und der Verzurrhaken (10) innerhalb der Anschlagnase (14) quer zur Nutzfahrzeugfahrtrichtung verschwenkbar ist.

5. Anordnung zur Ladungssicherung nach einem der Ansprüche 1 bis 4, **dadurch gekennzeichnet, dass** der Verzurrhaken (10) in seinem oberen Bereich einen Mittelsteg (18) aufweist, der einen inneren, im wesentlichen O-förmigen Hakenaufnahmebereich (19) begrenzt, und dass sich von dem Mittelsteg (18) höckerförmige Anformungen (17) anschließen, die eine Fingerhandhabe zum Herausschwenken des Verzurrhakens (10) aus einer Ruhestellung darbieten.

6. Anordnung zur Sicherung von Ladung nach einem der Ansprüche 1 bis 5, **dadurch gekennzeichnet, dass** das Basiselement (9) mit den Haltemitteln (3) verschraubbar ist.

7. Anordnung zur Ladungssicherung nach einem der Ansprüche 1 bis 6, **dadurch gekennzeichnet, dass** neben den Lochausnehmungen (5) zur Anordnung der Basiselemente Verzurröffnungen (4) in den als Zurrlochleisten ausgebildeten Haltemitteln (3) vorgesehen sind.

8. Anordnung zur Ladungssicherung nach einem der Ansprüche 1 bis 7, **dadurch gekennzeichnet, dass** der Verzurrhaken (10) eine derartige Breite hat, dass er in etwa paralleler Ausrichtung zur Hocherstreckung des Haltemittels (3) nicht auf die Fläche oberhalb der Ladefläche ragt.

## Claims

1. Arrangement for securing loads on load-carrying surfaces (1) of semi-trailers, containers or similar bodies of commercial vehicles, having retaining means (3) which are arranged at the outer longitudinal sides (2) of the load-carrying surface (1) and which are provided with openings in hole form, there being detachably arranged in openings in hole form (5) in the retaining means (3) base members (9) to which are fastened eyes (10) for lashings which are able to pivot transversely to the direction of travel of the commercial vehicle and hence on an axis of pivot lying substantially parallel to the longitudinal axis of the vehicle, and there being detachably arranged in the openings in hole form (5) in the retaining means (3) base members (9) which are able to pivot in and in the opposite direction from the direction of travel of the commercial vehicle on a substantially horizontal axis, **characterised in that**, when a base member (9) is in an upright position on the retaining means (3), the vertical extent of the base member (9) is such that the eye (10) for lashings able to be connected to the base member (9) can be pivoted inwards towards the load-carrying surface (1), transversely to the direction of travel, thus enabling it to occupy a substantially horizontal position for lashing purposes and causing it to overlap the top face of the retaining means (3).

2. Arrangement for securing loads according to claim 1, **characterised in that** the base member (9) has a stop (14) which limits the ability of the eye (10) for lashings to pivot, transversely to the direction of travel of the commercial vehicle, beyond the outer edge of the load-carrying surface (1).

3. Arrangement for securing loads according to claim 1 or 2, **characterised in that**, in the region where the base members (9) are arranged, the retaining means (3) have a recess (8) oriented along the longitudinal axis of the commercial vehicle in which the base member (9) is pivotable in and in the opposite direction from the direction of travel and, in a rest position, can be arranged to be substantially depressed relative to a bottom outer region (7) of the retaining means (3) which follows on from the recess (8).

4. Arrangement for securing loads according to one of claims 1 to 3, **characterised in that** the base member (9) has a fastening ring, provided with a bolt hole, and a stopping projection (14) connected thereto, the stopping projection (14) fitting over a region of the eye for lashings at least in a region or regions and the eye (10) for lashings being pivotable transversely to the direction of travel of the commercial vehicle, within the stopping projection (14).

5. Arrangement for securing loads according to one of claims 1 to 4, **characterised in that**, in its top region, the eye (10) for lashings has a central cross-piece (18) which forms a boundary of an inner, substantially O-shaped, hook receiving region (19), and **in that**, following on from the central cross-piece (18), there are integral humped formations (17) which provide a finger-hold for pivoting the eye (10) for lashings out of a rest position.

6. Arrangement for securing loads according to one of claims 1 to 5, **characterised in that** the base member (9) can be screwed or bolted to the retaining means (3)

7. Arrangement for securing loads according to one of claims 1 to 6, **characterised in that** the retaining means (3) take the form of strips containing holes for lashings and in them are provided not only the openings in hole form (5) for positioning the base members but also apertures for securing purposes (4).

8. Arrangement for securing loads according to one of claims 1 to 7, **characterised in that** the width of the eye (10) for lashings is such that, when it is aligned approximately parallel to the vertical extent of the retaining means (3), it does not project into the area above the load-carrying surface.

## Revendications

1. Agencement de sécurisation de chargement sur des surfaces de chargement (1) de semi-remorques, conteneurs ou carrosseries similaires de véhicules utilitaires avec des moyens de retenue (3) pourvus d'évidements percés, disposés sur les côtés extérieurs longitudinaux (2) de la surface de chargement (1), sachant que des éléments de base (9) sont disposés de manière amovible sur des évidements percés (5) des moyens de retenue (3), sur lesquels éléments de base (9) sont fixés des crochets d'amarrage (10) pouvant pivoter transversalement au sens de la marche du véhicule utilitaire et ainsi autour d'un axe de pivotement placé sensiblement parallèlement à l'axe longitudinal de véhicule, et sachant que des éléments de base (9) pouvant pivoter dans le sens de la marche et dans le sens inverse du véhicule utilitaire autour d'un axe sensiblement horizontal sont disposés de manière amovible sur les évidements percés (5) des moyens de retenue (3), **caractérisé en ce qu'**en position verticale d'un élément de base (9) sur le moyen de retenue (3), l'élément de base (9) présente une extension verticale telle que le crochet d'amarrage (10) pouvant être relié à l'élément de base (9) peut être pivoté vers l'intérieur transversalement au sens de la marche vers la surface de chargement (1) de sorte que celui-ci puisse occuper une position d'amarrage sensiblement horizontale et recouvre l'arête frontale côté supérieur du moyen de retenue (3).

2. Agencement de sécurisation de chargement selon la revendication 1, **caractérisé en ce que** l'élément de base (9) présente une butée (14) qui limite la pivotabilité du crochet d'amarrage (10) transversalement au sens de la marche du véhicule utilitaire au-delà de l'arête extérieure de la surface de chargement (1).

3. Agencement de sécurisation de chargement selon la revendication 1 ou 2, **caractérisé en ce que** les moyens de retenue (3) présentent, dans la zone de l'agencement des éléments de base (9), un creux (8) orienté vers l'axe longitudinal de véhicule utilitaire, dans lequel l'élément de base (9) peut être pivoté dans le sens de la marche et dans le sens inverse et est à disposer dans une position de repos de manière sensiblement encastrée par rapport à une zone extérieure (7) inférieure contiguë à celle-ci du moyen de retenue (3).

4. Agencement de sécurisation de chargement selon l'une quelconque des revendications 1 à 3, **caractérisé en ce que** l'élément de base (9) présente un anneau d'amarrage pourvu d'un alésage et un nez de butée (14) relié à celui-ci, sachant que le nez de butée (14) entoure une zone du crochet d'amarrage au moins par endroits et le crochet d'amarrage (10) peut être pivoté dans le nez de butée (14) transversalement au sens de la marche du véhicule utilitaire.

5. Agencement de sécurisation de chargement selon l'une quelconque des revendications 1 à 4, **caractérisé en ce que** le crochet d'amarrage (10) présente dans sa zone supérieure une traverse médiane (18) qui délimite une zone de réception de crochet (19) intérieure, sensiblement en forme de 0, et **en ce que** des formations (17) en forme de bosses constituant une prise pour les doigts pour le pivotement du crochet d'amarrage (10) hors de la position de repos, se raccordent par la traverse médiane (18).

6. Agencement de sécurisation de chargement selon l'une quelconque des revendications 1 à 5, **caractérisé en ce que** l'élément de base (9) peut être vissé aux moyens de retenue (3).

7. Agencement de sécurisation de chargement selon l'une quelconque des revendications 1 à 6, **caractérisé en ce que** des ouvertures d'amarrage (4) sont prévues dans les moyens de retenue (3) réalisés comme des barres percées d'amarrage à côté des évidements percés (5) pour l'agencement des éléments de base.

8. Agencement de sécurisation de chargement selon l'une quelconque des revendications 1 à 7, **caractérisé en ce que** le crochet d'amarrage (10) présente une largeur telle qu'il ne dépasse pas sur la surface au-dessus de la surface de chargement dans une orientation à peu près parallèle à l'étendue verticale du moyen de retenue (3).
